# EUROPÄISCHE PATENTSCHRIFT

(11) **EP 3 557 110 B1**
(45) Veröffentlichungstag und Bekanntmachung des Hinweises auf die Patenterteilung: **02.12.2020**
(21) Anmeldenummer: 19163427.8
(22) Anmeldetag: 18.03.2019
(51) Int. Cl.: F16L 59/14

(54) **THERMISCH GEDÄMMTES ROHR UND VERFAHREN ZU SEINER HERSTELLUNG**
THERMALLY INSULATED PIPE AND METHOD FOR PRODUCING SAME
TUBE THERMIQUEMENT ISOLÉ ET SON PROCÉDÉ DE FABRICATION

(30) Priorität: 18.04.2018 DE 102018109210
(43) Veröffentlichungstag der Anmeldung: 23.10.2019
(73) Patentinhaber: German Pipe Industrie- und Fernwärmetechnik GmbH, 99734 Nordhausen (DE)
(72) Erfinder: Herzer, Ralph, 06311 Helbra (DE)
(74) Vertreter: Scheffler, Jörg

(56) Entgegenhaltungen:
- WO-A1-2012/069564
- DE-A1- 19 823 585
- DE-T2- 69 631 432
- US-A1- 2002 185 188
- US-A1- 2006 121 227

## Beschreibung

Die Erfindung betrifft ein Verfahren zur Herstellung eines thermisch gedämmten Leitungsrohres mit zumindest einer Wärmedämmschicht zwischen zumindest einem Leitungsrohr und einem Mantelrohr aus einem polymeren Material, wobei in das polymere Material vor oder während der Verarbeitung zu dem Mantelrohr ein Schichtmineral eingebracht wird.

Thermisch gedämmte Rohre bzw. Leitungsrohre mit einer Wärmedämmschicht oder mehreren Wärmedämmschichten sowie Verfahren zu deren Herstellung sind aus dem Stand der Technik bereits bekannt.

Das Rohr besteht aus einem im Gebrauch medienführenden Leitungsrohr, welches zur Wärmedämmung von einer der Isolierung dienenden Wärmedämmschicht umgeben ist, bei der es sich in der Regel um einen Hartschaum handelt. Den äußeren Abschluss bildet ein Kunststoffaußenrohr als Mantelrohr, das dem Schutz vor Feuchtigkeit sowie dem mechanischen Schutz dient und häufig aus Polyethylen besteht.

Derartige doppelwandige Leitungsrohre finden beispielsweise bei Fernwärmeleitungen Verwendung. Der Durchmesser des Kunststoffaußenrohres liegt dabei im Allgemeinen zwischen 75 mm und 1.200 mm, wobei auch größere Durchmesser möglich sind.

Bei solchen gedämmten Rohren verändert sich bei dem in der Regel als Dämmmaterial verwendeten Polyurethanschaum (PU-Schaum) im Laufe der Zeit dessen Gaszusammensetzung. Dies geschieht durch Diffusion von Stickstoff und Sauerstoff aus der Luft in den Schaum hinein und durch Diffusion der ursprünglich im Schaum enthaltenen Schäum- bzw. Zellgase, insbesondere Kohlendioxid, aus dem Schaum heraus.

Durch den eindringenden Sauerstoff entstehen innerhalb der Isolierung Oxidationsprozesse, die zu einer Eigenschaftsverschlechterung der Isolierung führen. Das in den Zellen gebundene CO₂ diffundiert nach außen und wird durch Stickstoff aus der Atmosphäre ersetzt, was wiederum zu einer Verschlechterung der Dämmwirkung führt.

Die Luftgase haben eine deutlich höhere thermische Leitfähigkeit als das ursprünglich enthaltene Kohlendioxid. Daraus resultieren ein Abbau der Druckfestigkeit und der Scherbelastungsmöglichkeit des Schaumes sowie eine Schwächung der Zellwandstruktur.

Um diese Diffusionsprozesse zu minimieren, ist es beispielsweise aus der EP 1 355 103 A1 oder der EP 2 340 929 A1 bekannt, sogenannte Barriereschichten in das Leitungsrohr zu integrieren.

Aus der WO 2004/003423 A1 ist ein isoliertes Rohr bekannt, bei dem eine diffusionsregulierende Schicht zwischen dem Polyethylen-Außenrohr und dem Polyurethanschaum oder auf der Außenseite des Polyethylen-Außenrohres angeordnet ist.

Die DE 20 2010 018 026 U1 betrifft ein Kunststoffaußenrohr, das in seinem Inneren eine in das Außenrohr integrierte, aus einem Kunststoff bestehende Gaspermeationssperrschicht aufweist, die aus Ethylen-Vinylalkohol-Copolymer (EVOH) besteht.

Bei einem Leitungsrohr mit thermischer Dämmung gemäß der WO 2016/127267 A1 wird die Barriere aus einem Polymer gebildet, welches Polyketone enthält oder aus Polyketenen besteht.

Wenn die diffusionsregulierende Schicht auf der Außenseite des Mantelrohres angeordnet ist, besteht die Gefahr, dass die Schicht durch mechanische Einwirkungen beschädigt bzw. zerstört wird. Die Anordnung der diffusionsregulierenden Schicht zwischen dem Mantelrohr und der Wärmedämmschicht bringt ebenfalls Nachteile mit sich, weil diese während der Herstellung des Rohres beim manuellen oder maschinellen Einführen des Leitungsrohres in das Mantelrohr beschädigt werden kann.

Ein Nachteil von EVOH ist, dass zur Aufbringung von EVOH auf eine PE-Mantelschicht, beispielsweise durch Extrusion, eine zusätzliche Schicht eines Haftvermittlers erforderlich ist. Zudem ist EVOH schlecht schweißbar.

Ferner bezieht sich die EP 2 643 389 B1 auf Polymer-Nanocomposite mit Schichtmineralien. Darin wird der Einsatz funktioneller Nanofüllstoffe, beispielsweise Schichtsilikate, beschrieben, die ein vorteilhaftes, großes Aspektverhältnis besitzen und zur Herstellung von Schichtsilikat-Nanocompositen eingesetzt werden.

Die DE 696 31 432 T2 betrifft koextrudierte mehrlagige Kunststoffrohre mit einem oder mehreren Innenrohren, die von einer mittleren Lage aus einem Material umgeben sind, das weicher als das des Innenrohrs ist, und mit einem Außenrohr, welches die das eine oder die mehreren Innenrohre umgebende mittlere Lage umschließt. Das Innenrohr ist durch verformbare Lagen geschützt, wodurch die Haftkräfte zwischen den Grenzflächen sämtlicher Schichten so gering wie möglich und einstellbar sind. Das Innenrohr bleibt somit kreisrund und unbeschädigt, selbst wenn das Außenrohr durch Druck oval wird.

Die DE 19 78 900 U betrifft ein wärmeisoliertes Leitungsrohr mit einem Innenrohr aus festem Material, insbesondere Stahl, einer das Innenrohr umgebenden Schicht aus Kunststoffschaum und einer unter Verwendung eines duroplastischen Kunststoffs hergestellten Hüllschicht. Der duroplastische Kunststoff der Hüllschicht kann mit einem Füllstoff versetzt sein, der die Festigkeit verbessert.

Die DE 198 23 585 A1 beschreibt ein Verbundelement, das eine Schicht aus einem thermoplastischen Kunststoff aufweist, die in der Regel auch bei einer vollständigen Verschmelzung mit einer weiteren Schicht von diesen Schichten unterscheidbar ist, indem diese Schicht beispielsweise durch Silikate, Glimmer oder andere bekannte Füllstoffe gefüllt wird. Dadurch ist eine Unterscheidung der Schichten beispielsweise licht- oder elektronenmikroskopisch möglich.

Aus der DE 696 31 432 T2 ist ein koextrudiertes mehrlagiges Kunststoffrohr bekannt, das verbesserte mechanische Eigenschaften hat, beispielsweise Stoßfestigkeit und Ringsteifigkeit, und bei dem das Innenrohr unter Belastungen verschiedener Art nicht bricht. Das Rohr hat eine sehr hohe Schlagfestigkeit, wenn das Innen- oder das Außenrohr aus orientiertem Thermoplast bestehen, indem beispielsweise Glasstapelfasern als Verstärkung verwendet werden, die derart orientiert sind, dass sie von der axialen Richtung des Rohres abweichen und beispielsweise in Umfangsrichtung liegen. Eine äußere Lage aus mit Mica gefülltem Polyolefin bietet Isoliereigenschaften sowie axiale Steifigkeit.

Die US 2002/185188 A1 beschreibt ein Verbundrohr, welches mit einer zusätzlichen Permeationssperrschicht ausgestattet ist, die beispielsweise aus gefüllten Polymeren oder Kompositen aufgebaut ist, denen Füllstoffe zugesetzt sein können, um die Permeabilität des Polymers zu verringern. Beispiele für solche Füllstoffe umfassen beispielsweise ein Schichtmineral.

Das in der DE 198 23 585 A1 beschriebene Verbundelement weist eine Schicht aus einem thermoplastischen Kunststoff auf, die in der Regel auch bei einer vollständigen Verschmelzung mit einer weiteren Schicht von diesen Schichten unterscheidbar ist, indem diese Schicht beispielsweise durch Silikate, Glimmer oder andere bekannte Füllstoffe gefüllt wird. Dadurch ist eine Unterscheidung der Schichten beispielsweise licht- oder elektronenmikroskopisch möglich.

Die US 2006/121227 A1 bezieht sich auf ein Rohr mit Gassperreigenschaften, Sauerstoffbarriereeigenschaften und feuchtigkeitsbeständigen Eigenschaften, um das Austreten von Luft und Gas darin zu verhindern. Ein zur Herstellung des Rohres bestimmtes Granulat aus einem polymeren Material enthält einen Anteil eines Nanocomposites mit Schichtmineralien aus einem geladenen Dreischichtsilikat.

Der Erfindung liegt die Aufgabe zugrunde, ein zur Herstellung eines Leitungsrohres bestimmtes Verfahren zur Herstellung eines thermisch gedämmten Rohres zu schaffen, mit dem die gewünschten Gaspermeationssperreigenschaften ohne eine zusätzliche Schicht oder Beschichtung erreicht werden.

Diese Aufgabe wird erfindungsgemäß dadurch gelöst, dass in das polymere Material vor und/oder während der Verarbeitung zu dem Mantelrohr ein Schichtmineral eingebracht wird, wobei das Mantelrohr durch Extrusion eines zugeführten Granulates hergestellt wird, in welches das Schichtmineral eingemischt wird, indem das Schichtmineral dem Hauptschmelzestrom folgend in diesen eingebracht wird, sodass dieses sich in dem erzeugten Mantelrohr entsprechend dessen Längsrichtung ausrichtet und eine als Gaspermeationssperre wirkende Schicht bildet. Das Schichtmineral wird so durch das polymere Material gebunden, das dabei als Matrix dient. Somit bleiben die gewünschten Eigenschaften des Mantelrohres, insbesondere die gewünschte elastische Verformbarkeit, uneingeschränkt erhalten. Selbstverständlich sind auch Koextrusionsverfahren zur Herstellung mehrschichtiger Erzeugnisse problemlos realisierbar.

Indem gemäß einer weiteren besonders Erfolg versprechenden Ausgestaltungsform des erfindungsgemäßen Verfahrens das polymere Material und das darin eingebrachte Schichtmineral in einem aufgeschmolzenen Zustand einer Scher- und/oder Dehnbeanspruchungen sowie einer energiereichen Strahlung ausgesetzt wird, kann erfindungsgemäß eine homogene, fein verteilte und aufgeschlossene Verteilung der Schichtmineralien in der Polymermatrix erreicht werden. Dadurch kann die Werkstoffmorphologie mit Hilfe eines zeitlich und räumlich exakt steuerbaren Energie- und Ladungseintrages energiereicher Strahlung und insbesondere energiereicher Elektronen unter den dynamischen Bedingungen des Schmelzemischprozesses, das heißt den Scher- und Dehnfeldern, positiv beeinflusst werden.

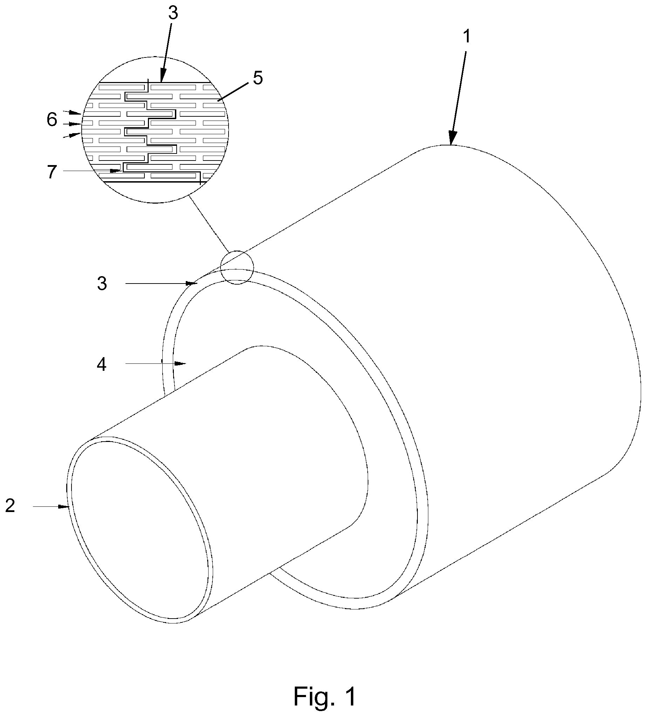

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt in einer Prinzipdarstellung ein thermisch gedämmtes Rohr 1, z. B. für Fernwärmeleitungen. Das Rohr 1 hat ein beispielsweise zum Transport von Heißwasser bestimmtes Leitungsrohr 2 sowie ein Mantelrohr 3, welches eine das Leitungsrohr 2 umgebende Wärmedämmschicht 4 einschließt. Um eine unerwünschte Gaspermeation durch das polymere Mantelrohr 3 zu vermeiden oder zumindest wesentlich zu reduzieren enthält das polymere Material 5 des Mantelrohres 3 ein Schichtmineral 6. In dem so gebildeten Polymer-Composite richten sich die Schichtmineralien 6 in der Schmelze herstellungsbedingt in zumindest einer Schicht konzentrisch zu dem Mantelrohr 3 aus und bilden so eine gasundurchlässige Schicht. Aufgrund der geringen Abmessungen der schuppenartigen Schichtmineralien 6 erfordert deren Zugabe keinerlei grundlegende Änderung der Herstellungsverfahren und führt zudem auch nicht zu unerwünschten, nachteiligen Eigenschaftsveränderungen des Rohres 1. So kommt es insbesondere nicht zu einer Versprödung des Polymer-Composites, da auch in der durch die Polymermatrix fixierten relativen Orientierung der Schichtmineralien 6 eine eingeschränkte relative Beweglichkeit der Schichtmineralien 6 erhalten bleibt. Somit bleibt die Gaspermeationssperrwirkung aufgrund eines labyrinthartigen Pfades 7 auch in einem gebogenen Zustand des Rohres 1 erhalten.

## Patentansprüche

1. Verfahren zur Herstellung eines thermisch gedämmten Rohrs (1) mit zumindest einer Wärmedämmschicht zwischen zumindest einem Leitungsrohr (2) und einem Mantelrohr (3) aus einem polymeren Material (5), wobei in das polymere Material (5) vor und/oder während der Verarbeitung zu dem Mantelrohr (3) ein Schichtmineral (6) eingebracht wird, **dadurch gekennzeichnet, dass** das Mantelrohr (3) durch Extrusion eines zugeführten Granulates hergestellt wird, in welches das Schichtmineral (6) eingemischt wird und dass das Schichtmineral (6) dem Hauptschmelzestrom folgend in diesen eingebracht wird, sodass dieses sich in dem erzeugten Mantelrohr entsprechend dessen Längsrichtung ausrichtet und eine als Gaspermeationssperre wirkende Schicht bildet.

2. Verfahren nach Anspruch 1, **dadurch gekennzeichnet, dass** das polymere Material (5) und das darin eingebrachte Schichtmineral (6) in einem aufgeschmolzenen Zustand einer Scher- und/oder Dehnbeanspruchungen ausgesetzt werden.

## Claims

1. Process for the production of a thermally insulated pipe (1) with at least one thermal insulation layer between at least one conveying pipe (2) and one jacketing pipe (3) made of a polymeric material (5), wherein a layered mineral (6) is introduced into the polymeric material (5) before and/or during processing to give the jacketing pipe (3), **characterized in that** the jacketing pipe (3) is produced by extrusion of a granulate which is introduced and into which the layered mineral (6) is mixed, and **in that** the layered mineral (6), following the main melt stream, is introduced into the same, in a manner such that the said mineral orientates itself in the resultant jacketing pipe in accordance with the longitudinal direction thereof and forms a layer which acts as gas permeation barrier.

2. Process according to Claim 1, **characterized in that** the polymeric material (5) and the layered mineral (6) introduced therein are exposed in a molten state to a shear stress and/or tensile stresses.

## Revendications

1. Procédé pour la fabrication d'un tube isolé thermiquement (1) comportant au moins une couche d'isolation à la chaleur entre au moins un tube conducteur (2) et un tube d'enveloppe (3) composé d'un matériau polymérique (5), dans lequel, avant et/ou pendant la transformation en tube d'enveloppe (3), un minéral stratifié (6) est introduit dans le matériau polymérique (5), **caractérisé en ce que** le tube d'enveloppe (3) est fabriqué par extrusion d'un granulat alimenté, dans lequel le minéral stratifié (6) est mélangé et **en ce que** le minéral stratifié (6) est introduit dans celui-ci à la suite du flux principal de masse fondue, de sorte que celui-ci s'oriente dans le tube d'enveloppe produit selon sa direction longitudinale et forme une couche ayant l'effet d'une barrière de perméation de gaz.

2. Procédé selon la revendication 1, **caractérisé en ce que** le matériau polymérique (5) et le minéral stratifié (6) introduit dans celui-ci sont soumis dans un état fondu à des contraintes de cisaillement et/ou de dilatation.
